# EUROPÄISCHE PATENTANMELDUNG

(11) **EP 2 420 480 A2**
(43) Veröffentlichungstag der Anmeldung: **22.02.2012**
(21) Anmeldenummer: 11177315.6
(22) Anmeldetag: 11.08.2011
(51) Int. Cl.: C04B 28/02, C04B 28/10, C04B 40/06

(54) **Trockenmörtel**

(30) Priorität: 20.08.2010 DE 202010011640 U
(71) Anmelder: REHAU AG + Co, 95111 Rehau (DE)
(72) Erfinder: Kania, Guido, 91080 Marloffstein/Rathsberg (DE)

(57) **Zusammenfassung**

Die Erfindung betrifft einen Trockenmörtel, enthaltend hydraulisch bindende Stoffe, wie Zement und/oder Kalk, inerte Füllstoffe, wie Quarzsand, und ein Tonmineralgemisch, der mit Wasser gemischt ein flie ßfähiges Verpressmaterial (5) ergibt, mit dem bei in das Erdreich eingebrachten Erdwärmesonden (1) Zwischenräume zwischen den Erdwärmesonden (1) und dem umgebenden Erdreich (2) verpressbar sind, der sich dadurch auszeichnet, dass ein Ölbindemittel (6) enthalten ist.

## Beschreibung

Die Erfindung betrifft einen Trockenmörtel, der mit Wasser gemischt ein Verpressmaterial ergibt, mit dem bei Erdwärmesonden Zwischenräume zwischen den Erdwärmesonden und dem umgebenden Erdreich verpresst werden, und der im Wesentlichen hydraulisch bindende Stoffe, wie Zement und/oder Kalk, inerte Füllstoffe, wie Quarzsand, und ein Tonmineralgemisch enthält.

Weiterhin betrifft die Erfindung ein Verpressmaterial, welches aus dem Trockenmörtel und Wasser herstellbar ist.

Moderne und energiesparende Heizungs- und Kühlsysteme für Gebäude werden mehr und mehr mit Erdwärmesonden versorgt.

Dazu werden Bohrungen, die bis in mehrere Hundert Meter Tiefe reichen können, in das Erdreich eingebracht. In diese Bohrungen werden Rohrleitungssysteme eingesetzt, durch die ein Fluid strömt, welches Erdwärme aus dem Erdreich aufnehmen kann und diese Erdwärme an eine Übergabestation zum Zwecke der Gebäudeheizung transportiert.

In einer Abwandlung kann auch vorgesehen sein, dass beispielsweise in der Sommerperiode Energie aus dem Gebäude zum Zwecke der Kühlung mittels der Erdwärmesonde in das Erdreich abgeleitet wird, um dort dann an das Erdreich abgegeben zu werden.

Um den thermischen Anschluss der Erdwärmesonde, die im Allgemeinen als Kunststoffrohr ausgebildet ist, an das umgebende Erdreich herzustellen, wird der Zwischenraum zwischen Erdwärmesonde und umgebenden Erdreich mit einem Verpressmaterial verpresst.

Das Verpressmaterial ist aus einem Trockenmörtel, der mit Wasser gemischt wird, herstellbar.

Der Trockenmörtel selbst kann hydraulisch bindende Stoffe, wie Zement und/oder Kalk, inerte Füllstoffe, und ein Tonmineralgemisch enthalten.

Neben der Schaffung des thermischen Anschlusses der Erdwärmesonde an das umgebende Erdreich mit Hilfe des die Zwischenräume ausfüllenden Verpressmaterials, welches nach dem Einbringen in das Bohrloch aushärtet, wird die Erdwärmesondenleitung durch das Verpressmaterial auch stabilisiert, dass heißt es wird gegenüber dem in der Leitung durch das Fluid erzeugten Druck ein äußerer Gegendruck aufgebaut.

Schließlich werden beim Bohren angeschnittene Grundwasserleiter im Erdboden (so genannten Aquiferen) durch das in der Regel hydraulisch gebundene Verpressmaterial dauerhaft voneinander getrennt, was große Vorteile bei der Sicherung der Grundwasservorkommen mit sich bringt.

Ein Trockenmörtel für diesen Zweck ist beispielsweise aus der DE 10 2007 031 418 B3 bekannt.

Die Bohrungen im Erdboden für die einzubringenden Erdwärmesonden werden im Lufthebe-Spülbohrverfahren oder im so genannten Imlochhammer-Bohrverfahren abgeteuft.

Bei diesen beiden Bohrverfahren erfolgt der Antrieb des Bohrmeißels durch unter hohem Druck stehende Gase, wobei hier bevorzugt Druckluft eingesetzt wird.

Die Druckluft wird mit entsprechenden Kompressoren erzeugt, wobei der Druckluft stets ein geringer Ölanteil in Form eines feinen Ölnebels zugesetzt wird.

Diese ölhaltige Druckluft wirkt dem Verschleiß sowohl der Kompressoren als auch der eingesetzten druckluftbetriebenen Bohrwerkzeuge entgegen und minimiert diesen.

Nachteilig an diesem Stand der Technik ist, dass diese ölhaltige Druckluft nach Betätigung des druckluftbetriebenen Bohrwerkzeugs im Bohrloch austritt.

Daher wird bei einer Bohrung ein gewisser Ölanteil in die Bohrung im Erdreich eingetragen und lagert sich dort ab. Dies hat erhebliche negative Auswirkungen auf den Erdboden und das anstehende Grundwasser.

Aus diesem Grund sind in Zonen erhöhten Grundwasserschutzes derartige Bohrarbeiten oftmals stark eingeschränkt beziehungsweise vollständig untersagt.

Zur Verdeutlichung der Problematik ist davon auszugehen, dass pro 100 m zu bohrendes Erdreich Ölmengen von bis zu 10 Liter freigesetzt und damit in das Erdreich eingebracht werden, die oftmals beträchtliche negative Auswirkungen nach sich ziehen.

Hier setzt die Erfindung ein, die es sich zur Aufgabe stellt hat, einen Trockenmörtel anzugeben, der die vorstehenden geschilderten Nachteile des Standes der Technik überwindet.

Eine weitere Aufgabe der Erfindung ist es, ein Verpressmaterial anzugeben, welches aus dem Trockenmörtel und Wasser herstellbar ist.

Die Aufgabe der Erfindung wird mit einem Trockenmörtel gemäß Anspruch 1 gelöst.

Erfindungsgemäß ist hierzu vorgesehen, einen Trockenmörtel einzusetzen, welcher hydraulisch bindende Stoffe, wie Zement und/oder Kalk, inerte Füllstoffe, wie Quarzsand, und ein Tonmineralgemisch enthält, der mit Wasser gemischt ein fließfähiges Verpressmaterial ergibt, mit dem bei in das Erdreich eingebrachten Erdwärmesonden Zwischenräumen zwischen den Erdwärmesonden und dem umgebenden Erdreich verpressbar sind, und der sich dadurch auszeichnet, dass ein Ölbindemittel enthalten ist.

Durch das erfindungsgemäße Vorsehen eines Ölbindemittels wird Öl im Bohrloch gebunden.

Unter "Öl" wird in diesem Zusammenhang ein Kohlenwasserstoff oder eine Mischung von Kohlenwasserstoffen, ein Mineralöl, ein synthetisch hergestelltes Öl, ein Öl pflanzlichen oder tierischen Ursprungs oder eine Mischung der vorgenannten verstanden.

Es ist in diesem Zusammenhang besonders vorteilhaft, wenn das Ölbindemittel sich sowohl im Trockenmörtel, als auch im Verpressmaterial, das aus dem Trockenmörtel und Wasser herstellbar ist, homogen eingemischt bzw. verteilt ist.

Es ist im Rahmen der vorliegenden Erfindung vorgesehen, dass der Trockenmörtel ein Ölbindemittel enthält, welches ein Adsorptionsstoff oder ein Absorptionsstoff ist.

Durch das Vorsehen eines Adsorptionsstoffes oder eines Absorptionsstoffes als Ölbindemittel lässt sich Öl besonders vorteilhaft binden.

Als Adsorption (lat.: adsorptio bzw. adsorbere = (an-)saugen) wird hier die Anreicherung von Stoffen aus Gasen oder Flüssigkeiten an der Oberfläche eines Festkörpers, allgemeiner an der Grenzfläche zwischen zwei Phasen verstanden.

Adsorption unterscheidet sich von der Absorption, bei der die Stoffe in das Innere eines Festkörpers oder einer Flüssigkeit eindringen. Der Oberbegriff für diese Anreicherungsvorgänge lautet Sorption.

Als Adsorptionsstoff wird in diesem Zusammenhang ein Stoff verstanden, der geeignet ist, an seiner Oberfläche Öle durch Adsorption zu binden.

Als Absorptionsstoff dagegen wird ein Stoff verstanden, welcher Öle durch Aufnahme in sein Inneres (in die Matrix) bindet.

Es ist besonders vorteilhaft, wenn das Ölbindemittel aus Partikeln ausgewählt ist, wie disperse Kieselsäure, Silikaten aus der Gruppe der Zeolithe, quellfähige Mineralien, wie beispielsweise Bentonit, Eisenoxid, Kieselgur, Aktivkohle, Braunkohle, Kalksteinmehl.

Erfindungsgemäß kann auch vorgesehen sein, dass das Ölbindemittel Fasern enthält, wie beispielsweise Polypropylenfasern, die Öl aufnehmen können.

Es können auch Mischungen der vorgenannten Partikel und der vorgenannten Fasern als Ölbindemittel eingesetzt werden.

Es ist im Rahmen der Erfindung von großem Vorteil, wenn der Trockenmörtel das Ölbindemittel zu einem Gewichtsanteil von 1 bis 25 %, vorzugweise 5 bis10 %, enthält. Dadurch kann eine besonders wirksame Bindung des Öls durch das Ölbindemittel erfolgen. Die mechanisch-physikalischen Eigenschaften des derart modifizierten erfindungsgemäßen Trockenmörtels und des daraus mit Wasser zubereiteten Verpressmaterials werden durch die vorgesehene Menge an enthaltenem Ölbindemittel nicht oder nur unwesentlich verändert.

Es hat sich in diesem Zusammenhang ganz besonders günstig erwiesen, wenn die Partikel eine Korngröße von 2 bis 1.000 µm, vorzugsweise eine Korngröße von 20 bis 300 µm aufweisen.

Ein Ölbindemittel von Form von Partikeln dieser Korngröße ist einerseits besonders homogen im Trockenmörtel und im daraus hergestellten Verpressmaterial verteilbar, andererseits weist ein derartiges Ölbindemittel eine hohe Bindefähigkeit für Öl auf.

Besonders vorteilhaft ist, dass die Fasern, die als Ölbindemittel eingesetzt werden, einen Durchmesser von 1 bis 500 µm aufweisen, bevorzugt einen Durchmesser von 10 bis 200 µm.

Fasern mit einem derartigen Durchmesser nehmen diese Mengen Öl auf.

In einer bevorzugten Weiterbildung der Erfindung kann vorgesehen sein, dass das Ölbindemittel im Trockenmörtel vorgranuliert oder kompaktiert ist.

Ein vorgranuliertes oder kompaktiertes Ölbindemittel weist den Vorteil auf, dass es einerseits sehr exakt zum Trockenmörtel zudosierbar ist, andererseits lässt es sich im Trockenmörtel und dann im daraus hergestellten Verpressmaterial besonders homogen verteilen, weiterhin ist damit die Staubbelastung bei der Handhabung des Trockenmörtel erheblich reduziert.

Unter vorgranuliert oder kompaktiert wird hierbei verstanden, dass die Partikel und / oder Fasern, die das Ölbindemittel darstellen, zu Aggregaten zusammengefügt sind. Dies kann durch Bindemittel oder durch mechanisches Binden (beispielsweise durch Pressen) geschehen.

In einer günstigen Weiterbildung der Erfindung kann vorgesehen sein, dass das Ölbindemittel mit einer Wirksubstanz versehen ist, die einen Abbau des gebundenen Öls bewirkt.

Dies kann so vorgesehen sein, dass das Ölbindemittel mit der Wirksubstanz imprägniert ist.

Als Wirksubstanz kommen dabei bevorzugt Mikroorganismen zum Einsatz, vorzugsweise Hefen, wie beispielsweise vom Stamm Candida maltosa.

Hefen des Stammes Candida maltosa sind in der Lage, Öle auf biochemischem Wege abzubauen.

Es kann auch vorgesehen sein, Bakterien vorzugsweise Alkanivorax borkumensis oder Nocardia cyriacigeorgica oder Mischungen der vorgenannten als Wirksubstanz für das Ölbindemittel vorzusehen.

Die Wirksubstanz wird dabei bevorzugt mit einer Bakterienanzahl von mindestens 1,0 × 10⁷ KBE / ml (KBE = Keim bildende Einheiten) eingesetzt.

Hierdurch wird ein besonders wirksamer Abbau des Öles mit den Ölbindemitteln erreicht.

Der Einsatz von Wirksubstanzen wie beispielsweise Mikroorganismen zum Abbau des Öles ist besonders bevorzugt, da dadurch das Öl mineralisiert wird, also nach dem Abbau keine negativen Auswirkungen auf die Umwelt nach sich zieht.

In einer Weiterbildung der Erfindung kann auch vorgesehen sein, dass dem Trockenmörtel wärmeleitende Partikel zugesetzt sind, die die Wärmeleitung zwischen Erdreich und Erdwärmesonde begünstigen.

Solche wärmeleitende Partikel können auch Partikel sein, die als Ölbindemittel wirken.

In einer anderen Weiterbildung der Erfindung kann vorgesehen sein, dass dem Trockenmörtel wärmedämmende Partikel zugesetzt sind, die die Wärmeleitung zwischen Erdreich und Erdwärmesonde herabsetzen.

Wärmedämmende Partikel können beispielsweise geschäumte Partikel aus Polymermaterial sein, wie Polypropylenschaumpartikel.

Damit kann beispielsweise eine Erdwärmesonde derart im Bohrloch im Erdreich verpresst werden, dass in einem unteren Abschnitt in großer Tiefe ein Verpressmaterial eingesetzt wird, das aus Wasser und Trockenmörtel zubereitet wird, der wärmeleitende Partikel aufweist. Hierdurch wird eine hohe Übertragungsleistung an Wärme erzielt.

In einem oberen - nahe der Erdoberfläche befindlichen - Abschnitt in geringer Tiefe kann die Erdwärmesonde derart im Bohrloch im Erdreich verpresst werden, dass ein Verpressmaterial eingesetzt wird, das aus Wasser und Trockenmörtel zubereitet wird, der wärmedämmende Partikel aufweist. Hierdurch wird der Wärmeübergang wirksam reduziert. Vorteilhaft kann dies genutzt werden, um Wärmeaustausch gezielt in tiefen Schichten des Erdreichs vorzunehmen, ohne dass es zu erheblichen Verlusten an Wärme in oberen, also kälteren Bodenschichten kommt, so dass das Fluid dort keine Abkühlung erleidet.

Der erfindungsgemäße Trockenmörtel lässt sich durch Zumischen von Wasser oder einem wässrigen Fluid in ein fließfähiges Verpressmaterial führen, welches nach dem Verpressen der Zwischenräume zwischen Erdwärmesonde und Erdreich erhärtet und eine optimale mechanische und thermische Anbindung der Erdwärmesonde an das umgebende Erdreich ermöglicht.

Die Erfindung betrifft weiterhin eine Erdwärmesonde, die in das Erdreich eingebracht ist, wobei Zwischenräume zwischen der Erdwärmesonde und dem umgebenden Erdreich mit einem Verpressmaterial, wie vorstehend geschildert, verpresst ist.

Die Erfindung wird im Folgenden anhand von zwei Figuren verdeutlicht.
- Fig. 1: zeigt einen Längsschnitt durch ein Bohrloch im Erdreich, wobei in das Bohrloch eine Erdwärmesonde eingesetzt ist;
- Fig. 2: zeigt einen Längsschnitt durch ein Bohrloch im Erdreich, wobei in das Bohrloch eine Erdwärmesonde eingesetzt ist und der Zwischenraum zwischen Erdwärmesonde und Erdreich mit einem Verpressmaterial verpresst ist.

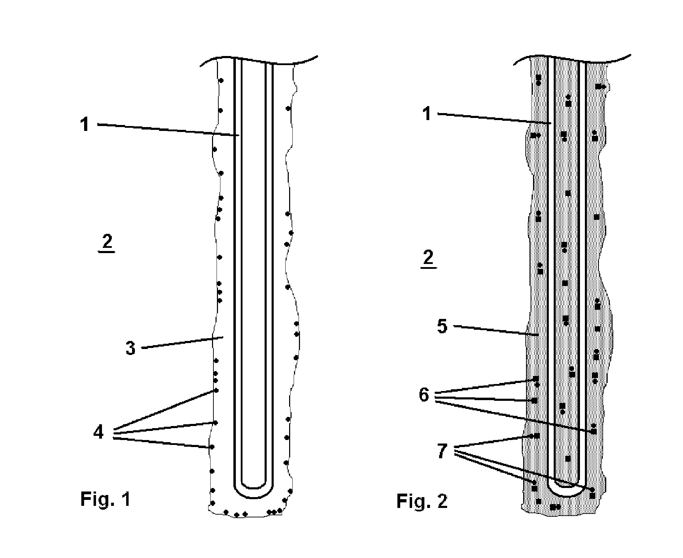

In Fig. 1 ist in einem Längsschnitt ein unterer Abschnitt eines Bohrloches 3 im Erdboden 2 gezeigt.

Im Bohrloch 3 ist eine Erdwärmesonde 1 eingesetzt. Bedingt durch die Bohrarbeiten zur Herstellung des Bohrloches 3 im Erdreich 2 sind im Bohrloch 3 Ölablagerungen 4 vorhanden. Diese sind schematisch als Tröpfchen an der Wand des Bohrloches 3 gezeigt. Die Ölablagerungen 4 kontaminieren das Bohrloch 3 im Erdreich 2 und gefährden die Qualität des Grundwassers.

In Fig. 2 ist ein Längsschnitt durch einen unteren Abschnitt eines Bohrloches 3 im Erdreich 2 dargestellt. In das Bohrloch 3 ist eine Erdwärmesonde 1 eingebracht.

Der Zwischenraum zwischen Erdwärmesonde 1 und Erdreich 2 ist mit einem Verpressmaterial 5 verpresst.
Im Verpressmaterial 5 sind Ölbindemittel 6 weitgehend homogen verteilt.

Das Ölbindemittel 6 ist fähig, Ölablagerungen zu binden, dadurch entsteht an Ölbindemittel 6 gebundenes Öl 7.

Durch die Bindung des Öls 7 am Ölbindemittel 6 stellt dies keine Umweltgefährdung mehr dar.

### Bezugszeichenliste

- 1: Erdwärmesonde
- 2: Erdreich
- 3: Bohrloch
- 4: Ölablagerungen
- 5: Verpressmaterial
- 6: Ölbindemittel
- 7: an Ölbindemittel gebundenes Öl

## Patentansprüche

1. Trockenmörtel, enthaltend hydraulisch bindende Stoffe, wie Zement und/oder Kalk, inerte Füllstoffe, wie Quarzsand, und ein Tonmineralgemisch, der mit Wasser gemischt ein fließfähiges Verpressmaterial (5) ergibt, mit dem bei in das Erdreich eingebrachten Erdwärmesonden (1) Zwischenräume zwischen den Erdwärmesonden (1) und dem umgebenden Erdreich (2) verpressbar sind, **dadurch gekennzeichnet, dass** ein Ölbindemittel (6) enthalten ist.

2. Trockenmörtel nach Anspruch 1, **dadurch gekennzeichnet, dass** das Ölbindemittel (6) ein Adsorptionsstoff oder eine Absorptionsstoff ist.

3. Trockenmörtel nach Anspruch 1 oder 2, **dadurch gekennzeichnet, dass** das Ölbindemittel (6) ausgewählt ist aus Partikeln, wie hochdisperser Kieselsäure, Silikaten aus der Gruppe der Zeolithe, Tonmineralien, Eisenoxid, Kieselgur, Aktivkohle, Braunkohle, Kalksteinmehl, und / oder Fasern, wie Polypropylenfasern oder Mischungen der vorgenannten.

4. Trockenmörtel nach einem der vorangehenden Ansprüche, **dadurch gekennzeichnet, dass** das Ölbindemittel (6) zu einem Gewichtsanteil von 1 bis 25 %, vorzugweise 5 bis10%, enthalten ist.

5. Trockenmörtel nach einem der vorangehenden Ansprüche, **dadurch gekennzeichnet, dass** die Partikel eine Korngröße von 2 bis 1000 µm, vorzugsweise 20 bis 300 µm aufweisen.

6. Trockenmörtel nach einem der Ansprüche 1 bis 4, **dadurch gekennzeichnet, dass** die Fasern einen Durchmesser von 1 bis 500 µm, vorzugsweise 10 bis 200 µm aufweisen.

7. Trockenmörtel nach einem der vorangehenden Ansprüche, **dadurch gekennzeichnet, dass** das Ölbindemittel (6) vorgranuliert oder kompaktiert ist.

8. Trockenmörtel nach einem der vorangehenden Ansprüche, **dadurch gekennzeichnet, dass** das Ölbindemittel (6) eine Wirksubstanz enthält, die einen Abbau des gebundenen Öls (7) bewirkt.

9. Verpressmaterial (5) aus einem Trockenmörtel nach einem der Ansprüche 1 bis 8 und Wasser zur Verpressung von Zwischenräumen bei in das Erdreich (2) eingebrachten Erdwärmesonden (1) zwischen den Erdwärmesonden (1) und dem umgebenden Erdreich (2).

10. Erdwärmesonde (1), die in das Erdreich (2) eingebracht ist, wobei Zwischenräume zwischen der Erdwärmesonde (1) und dem umgebenden Erdreich (2) mit einem Verpressmaterial (5) nach Anspruch 9 verpresst sind.
